# EUROPEAN PATENT APPLICATION

(11) **EP 4 742 380 A1**
(43) Date of publication of application: **13.05.2026**
(21) Application number: 24863272.1
(22) Date of filing: 06.09.2024
(51) Int. Cl.: H01M 50/105, H01M 50/126, H01M 50/116, B32B 15/08, B32B 15/20

(54) **POUCH SHEET, POUCH-TYPE BATTERY CASE, AND METHOD FOR MANUFACTURING BATTERY CASE**

(30) Priority: 06.09.2023 KR 20230118632; 05.09.2024 KR 20240121124
(71) Applicant: LG Energy Solution, Ltd., Seoul 07335 (KR)
(72) Inventor: LEE, Wan Soo, Daejeon 34122 (KR); KANG, Min Hyeong, Daejeon 34122 (KR); YU, Hyung Kyun, Daejeon 34122 (KR); HWANG, Soo Ji, Daejeon 34122 (KR); SONG, Dae Woong, Daejeon 34122 (KR); SHIN, Ji Hyun, Daejeon 34122 (KR); KIM, Gi Woung, Daejeon 34122 (KR)
(74) Representative: Goddar, Heinz J.
(86) International application number: PCT/KR2024/013545
(87) International publication number: WO 2025/053693

(57) **Abstract**

The present disclosure relates to a pouch sheet, a pouch-type battery case and a method for manufacturing a battery case, and the pouch sheet that is formed into a pouch-type battery case includes a first polymer layer located at an outermost side, a second polymer layer located at an opposite outermost side and a metal layer located between the first polymer layer and the second polymer layer, wherein the metal layer is located at a side of a neutral plane of the pouch sheet.

## Description

### TECHNICAL FIELD

### CROSS-REFERENCE TO RELATED APPLICATIONS

The present application claims priority to Korean Patent Application No. 10-2023-0118632 filed on September 6, 2023 and Korean Patent Application No. 10-2024-0121124 filed on September 5, 2024 in the Republic of Korea, the disclosures of which are incorporated herein by reference.

### TECHNICAL FIELD

The present disclosure relates to a pouch sheet, a pouch-type battery case and a method for manufacturing a battery case.

### BACKGROUND ART

Recently, with rising prices of energy sources caused by depletion of fossil fuels and growing concerns about environmental pollution, the need for eco-friendly alternative energy sources is an essential factor for future life. In this circumstance, studies have been conducted on a variety of energy production technologies such as solar, wind and tidal energy, and energy storage devices such as batteries for using the produced electrical energy more efficiently are of great interest.

Moreover, with technology development and increasing demand for electronic mobile devices and electric vehicles using batteries, the demand for batteries as an energy source is rapidly increasing, and accordingly many studies are being conducted on batteries that meet a variety of needs.

Batteries are gaining much attention as an energy source in a broad range of products including mobile devices and electric vehicles. In particular, secondary batteries are seen as a superior energy resource that can replace the use of the existing products using fossil fuels, and because they do not produce by-products from the use of energy, attention is paid to secondary batteries as an eco-friendly energy source.

On the other hand, secondary batteries are attracting attention as a power source for electric vehicles (EVs), hybrid electric vehicles (HEVs) and plug-in hybrid electric vehicles (Plug-In HEVs) proposed as a solution to air pollution from gasoline vehicles and diesel vehicles using fossil fuels. That is, secondary batteries are used in the form of a battery pack including a plurality of battery modules.

Secondary batteries, especially pouch-type secondary batteries undergo a process of forming a cup portion to manufacture a pouch battery case, and in this instance, stretching occurs in the case, in particular, a metal layer included in the case. In particular, bending of the metal layer occurs at the corner of the cup portion, and in this instance, the metal layer is subjected to additional tensile force by the bending and there is a risk of excessive stretching of the metal layer. As a consequence, it is impossible to form the pouch-type case more deeply.

### SUMMARY

### TECHNICAL PROBLEM

The present disclosure is designed to solve the above-described problem, and therefore the present disclosure is directed to providing a pouch sheet in which a metal layer is located at a more inward side than a neutral plane of the pouch sheet to prevent excessive stretching of the metal layer and improve formability.

The present disclosure is further directed to providing a pouch-type battery case manufactured using the pouch sheet and a method for manufacturing the same.

### TECHNICAL SOLUTION

A pouch sheet according to an embodiment of the present disclosure may be formed into a pouch-type battery case. The pouch sheet may include a first polymer layer located at an outermost side; a second polymer layer located at an opposite outermost side; and a metal layer located between the first polymer layer and the second polymer layer, and the metal layer may be located at a side of a neutral plane of the pouch sheet.

The second polymer layer may include a plurality of layers that is separable from each other.

The second polymer layer may include a base layer; and a reinforcement layer covering the base layer at an outer side, and having a larger thickness than the base layer.

The first polymer layer, the metal layer and the base layer may be laminated together, and the reinforcement layer may be separably attached to the base layer.

The neutral plane of the pouch sheet from which the reinforcement layer is removed may pass through the metal layer.

A thickness of the metal layer may be larger than a thickness of the second polymer layer.

A pouch-type battery case according to an embodiment of the present disclosure may have a recessed cup portion and a terrace portion disposed around the cup portion. The cup portion and the terrace portion in the pouch-type case may include a first polymer layer located at an innermost side; a second polymer layer located at an outermost side; and a metal layer located between the first polymer layer and the second polymer layer, and the metal layer may be located at a more inward side than a neutral plane of the case.

A method for manufacturing a battery case according to an embodiment of the present disclosure may include preparing a pouch sheet including a first polymer layer located at an innermost side, a second polymer layer located at an outermost side, and a metal layer located between the first polymer layer and the second polymer layer; and forming a recessed cup portion in the pouch sheet, and the metal layer may be located at a more inward side than a neutral plane of the pouch sheet.

The second polymer layer may include a base layer; and a reinforcement layer covering the base layer at an outer side, and having a larger thickness than the base layer.

The method for manufacturing the battery case may further include removing the reinforcement layer after forming the cup portion.

The preparing the pouch sheet may include preparing a laminated sheet of the first polymer layer, the metal layer and the base layer; and covering the base layer with the reinforcement layer at the outer side.

### ADVANTAGEOUS EFFECTS

According to an exemplary embodiment of the present disclosure, the neutral plane of the pouch sheet in the thickness direction may not pass through the metal layer. Accordingly, the metal layer may be subjective to compressive force over the entire area by the bending of the pouch sheet, thereby reducing the stretch ratio of the metal layer. That is, it may be possible to prevent cracks in the metal layer, and improve formability of the pouch sheet.

### BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure should not be construed as being limited to the drawings.
FIG. 1 is a perspective view of a pouch sheet according to Embodiment 1 of the present disclosure.
FIG. 2 is a cross-sectional view of the pouch sheet shown in FIG. 1.
FIG. 3 is a schematic diagram showing a tensile force to which the pouch sheet shown in FIG. 2 is subjected when it is formed.
FIG. 4 is a cross-sectional view of the pouch sheet from which a reinforcement layer of FIG. 2 is removed.
FIG. 5 is a perspective view showing a pouch-type battery case manufactured by forming the pouch sheet according to Embodiment 1 of the present disclosure.
FIG. 6 is a schematic diagram showing a pouch sheet before pressed by a press machine used in a method for manufacturing a battery case according to Embodiment 2 of the present disclosure.
FIG. 7 is a schematic diagram showing a pouch-type battery case manufactured by pressing a pouch sheet by the press machine shown in FIG. 6.
FIG. 8 is a perspective view showing of FIG. 7.
FIG. 9 is a flowchart of a method for manufacturing a battery case according to Embodiment 2 of the present disclosure.
FIG. 10 is a flowchart showing the sub-steps of the step S10 in the flowchart of FIG. 9.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

### Embodiment 1

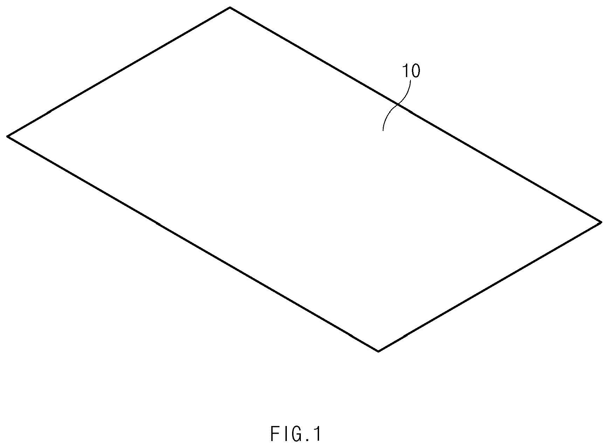

Hereinafter, a pouch sheet 10 and a pouch-type battery case 20 according to Embodiment 1 of the present disclosure will be described in detail with reference to FIGS. 1 to 5.

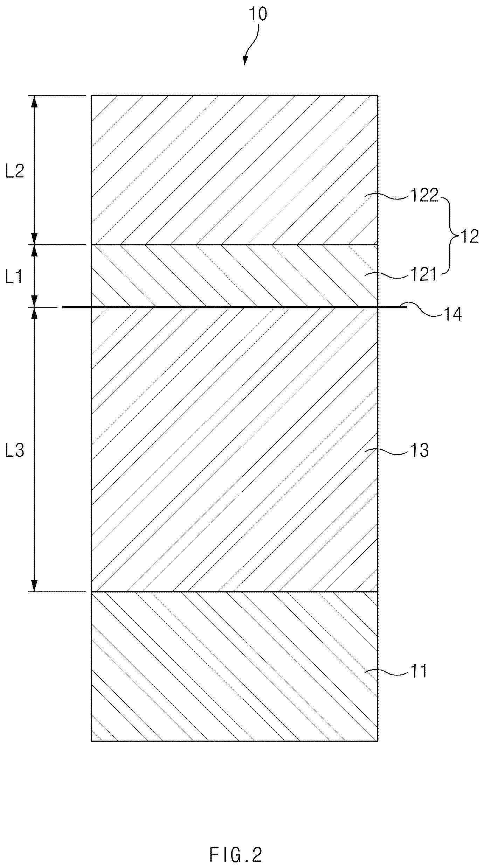

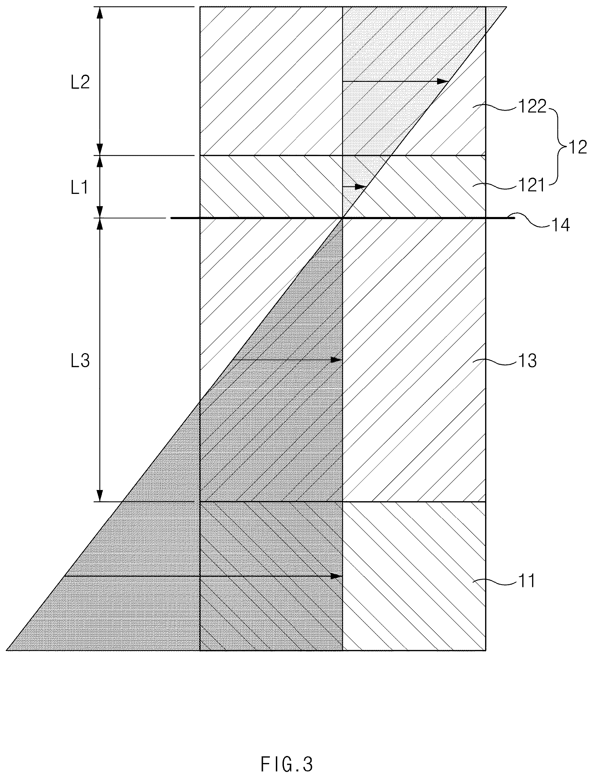

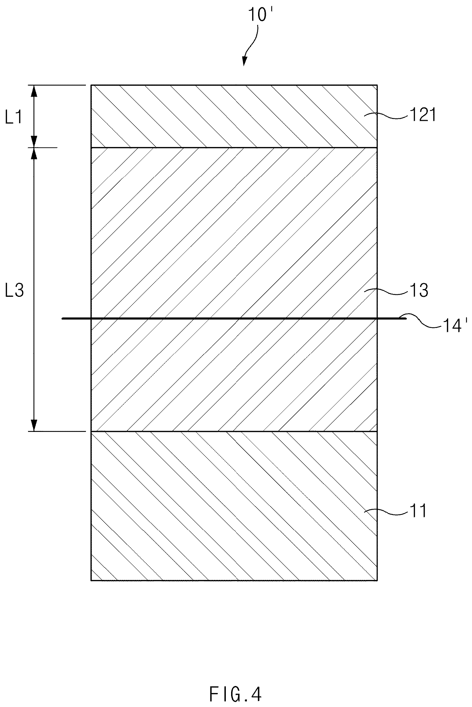

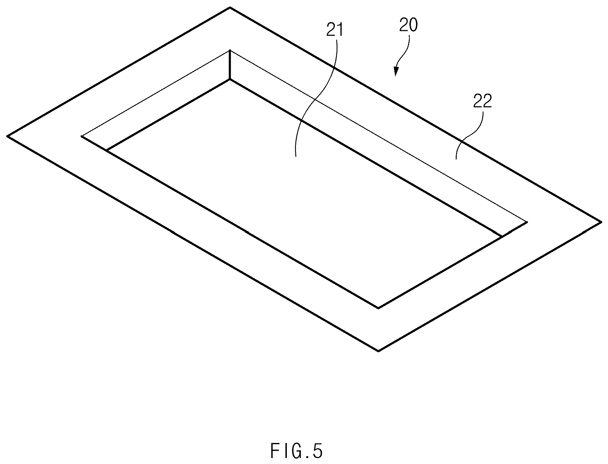

FIG. 1 is a perspective view of the pouch sheet according to Embodiment 1 of the present disclosure, FIG. 2 is a cross-sectional view of the pouch sheet shown in FIG. 1, FIG. 3 is a schematic diagram showing a tensile force to which the pouch sheet shown in FIG. 2 is subjected when it is formed, FIG. 4 is a cross-sectional view of the pouch sheet from which a reinforcement layer of FIG. 2 is removed, and FIG. 5 is a perspective view showing the pouch-type battery case manufactured by forming the pouch sheet according to Embodiment 1 of the present disclosure.

Referring to FIGS. 1 to 3, the pouch sheet 10 according to the present disclosure may be formed into the pouch-type battery case 20. The pouch sheet 10 according to the present disclosure may be formed with a multilayer structure. The pouch sheet 10 may include a first polymer layer 11, a second polymer layer 12 and a metal layer 13. The pouch sheet 10 may further include a nylon layer.

The first polymer layer 11 may be located at one outermost side of the pouch sheet 10. For example, the first polymer layer 11 may include polypropylene (PP) but is not limited thereto. The first polymer layer 11 may contact the metal layer 13.

The second polymer layer 12 may be located at the other outermost side of the pouch sheet 10. For example, the second polymer layer 12 may include Polyethylene Terephthalate (PET) but is not limited thereto. The second polymer layer 12 may contact the metal layer 13. Alternatively, a stretch assisting layer (not shown) may be present between the second polymer layer 12 and the metal layer 13. For example, the stretch assisting layer may include nylon.

The metal layer 13 may be located between the first polymer layer 11 and the second polymer layer 12. For example, the metal layer 13 may include aluminum but is not limited thereto.

A portion of the pouch sheet 10 in the thickness direction in cross section may be subjected to tensile force by bending, and other portion may be subjected to compressive force by bending. Additionally, there is a region in the cross section of the pouch sheet 10 which is not subjected to tensile force and compressive force and an imaginary plane corresponding to the region may be defined as a neutral plane 14. That is, the neutral plane 14 may be an imaginary plane corresponding to a region on which no tensile force and compressive force by bending of the pouch sheet 10 is not exerted.

Accordingly, as shown in FIG. 3, the tensile force or compressive force applied to the cross section of the pouch sheet 10 by bending is zero (0) in the neutral plane 14, and increases as it goes away from the neutral plane 14 along the thickness direction of the pouch sheet 10.

The neutral plane 14 may not match a mid plane passing through the geometric center of the pouch sheet 10 in the thickness direction. This is because the pouch sheet 10 is a composite including a plurality of layers having different materials.

The metal layer 13 may be located at one side of the neutral plane 14 of the pouch sheet 10. In other words, the neutral plane 14 of the pouch sheet 10 may not pass through the metal layer 13. More specifically, the metal layer 13 may be disposed at a location at which it is under compressive force by bending on the basis of the neutral plane 14 of the pouch sheet 10. Additionally, on the basis of the neutral plane 14, the first polymer layer 11 may be disposed at a location at which it is under compressive force by bending, and the second polymer layer 12 may be disposed at a location at which it is under tensile force.

In relation to this, in the process of forming a cup portion 21 in the pouch sheet 10, bending occurs in a portion of the pouch sheet 10 that forms the edge of the cup portion 21, and the pouch sheet 10 is under tensile force and compressive force by the bending. As described above, because the metal layer 13 is located at one side of the neutral plane 14 of the pouch sheet 10, the compressive force may be applied to the metal layer 13 by the bending, and the stretch ratio of the metal layer 13 may be reduced.

Accordingly, formability of the pouch film 10 is improved. The improved formability signifies that the cup portion 21 can be formed more deeply.

Meanwhile, the second polymer layer 12 may include a plurality of layers stacked one on another. The plurality of layers may be separably attached to each other. More specifically, the plurality of layers may include a base layer 121 and a reinforcement layer 122.

The reinforcement layer 122 may be located at a more outward side than the base layer 121. The reinforcement layer 122 may be attached to the base layer 121 separably from the outer side of the base layer 121. The base layer 121 and the reinforcement layer 122 may have the same material. However, the base layer 121 and the reinforcement layer 122 are not limited thereto, and may have different materials.

Accordingly, the reinforcement layer 122 may not contact the metal layer 13. The reinforcement layer 122 may protect the base layer 121 and the metal layer 13 from scratches or scuffs that may occur in the forming process of the pouch sheet 10.

The first polymer layer 11, the metal layer 13 and the base layer 121 may be laminated together, and the reinforcement layer 122 may be separably attached to the base layer 121. Accordingly, after the forming of the cup portion 21 is completed, the reinforcement layer 122 may be easily removed. Accordingly, it may be possible to prevent an increase in thickness of the finished product of the battery case 20 due to the reinforcement layer 13, and to manufacture the secondary battery having high energy density.

By the reinforcement layer 122, the neutral plane 14 of the pouch sheet 10 may not pass through the metal layer 13. In contrast, as shown in FIG. 4, the neutral plane 14' of the pouch sheet 10' from which the reinforcement layer 122 is removed may pass through the metal layer 13. In this state, when the cup portion 21 is formed in the pouch film 10, the outer part of the metal layer 13 in the thickness direction is under tensile force by bending, so there is a risk of excessive stretching and cracks.

That is, by the reinforcement layer 122, the location of the neutral plane 14 may be moved outwards in the thickness direction of the pouch sheet 10. Accordingly, the stretch ratio of the metal layer 13 may be reduced and formability of the pouch sheet 10 may be improved.

The thickness L2 of the reinforcement layer 122 may be larger than the thickness L1 of the base layer 121. Accordingly, the neutral plane 14 may be sufficiently moved so as not to pass through the metal layer 13.

The effect may be the same from when the thickness L2 of the reinforcement layer 122 becomes above a predetermined thickness with respect to the thickness L3 of the metal layer 13. For example, when the thickness L3 of the metal layer 13 is 60 µm, whether the thickness L2 of the reinforcement layer 122 is 25 µm or 50 µm, the maximum depth at which the pouch sheet 10 can be formed is the same. Accordingly, from the predetermined thickness or more, there is no need to inevitably increase the thickness of the reinforcement layer 122.

The thickness L3 of the metal layer 13 may be larger than the thickness L1 + L2 of the second polymer layer 12.

Meanwhile, the pouch-type battery case 20 according to the present disclosure may be manufactured by forming the cup portion 21 in the pouch film 10. That is, the foregoing description of the pouch film 10 may be equally applied to the pouch-type battery case 20, except the shape.

More specifically, the pouch-type battery case 20 according to the present disclosure may have the recessed cup portion 21 and a terrace portion 22 disposed around the cup portion 21.

The cup portion 21 and the terrace portion 22 may include the first polymer layer 11, the second polymer layer 12 and the metal layer 13. The metal layer 13 may be located at a more inward side than the neutral plane 14 of the case 20. Here, the inward side may refer to a side where the cup portion 21 is recessed.

### Embodiment 2

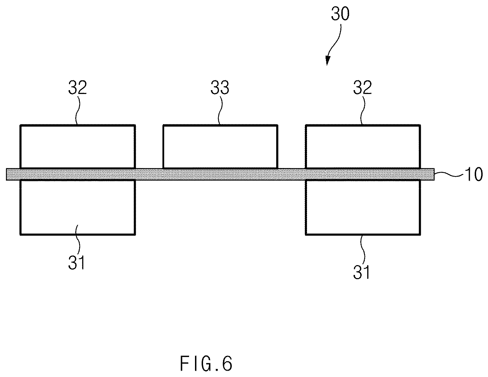

Hereinafter, a method for manufacturing a battery case according to Embodiment 2 of the present disclosure will be described in detail with reference to FIGS. 6 to 10.

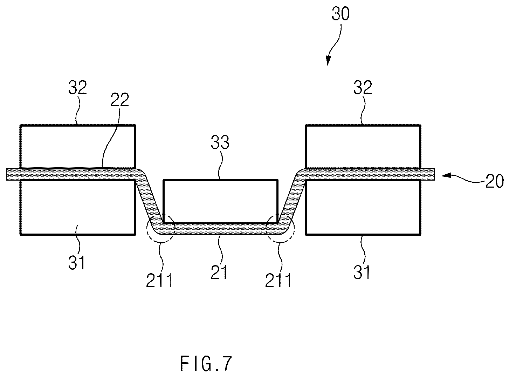

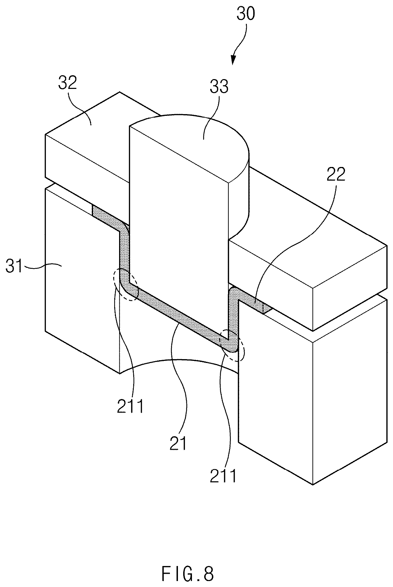

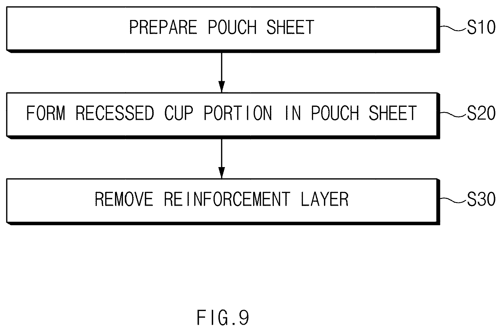

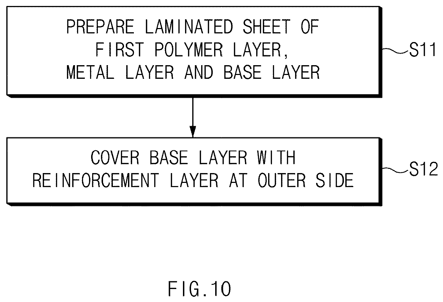

FIG. 6 is a schematic diagram showing the pouch sheet before pressed by a press machine used in the method for manufacturing the battery case according to Embodiment 2 of the present disclosure, FIG. 7 is a schematic diagram showing the pouch-type battery case manufactured by pressing the pouch sheet by the press machine shown in FIG. 6, FIG. 8 is a perspective view showing of FIG. 7, FIG. 9 is a flowchart of the method for manufacturing the battery case according to Embodiment 2 of the present disclosure, and FIG. 10 is a flowchart showing the sub-steps of the step S10 in the flowchart of FIG. 9.

The method for manufacturing the battery case according to the present disclosure may manufacture the pouch-type battery case 20 using the press machine 30.

The method for manufacturing the battery case according to the present disclosure may include the step S10 of preparing the pouch sheet 10 and the step S20 of forming the cup portion 21.

The pouch sheet 10 may include the first polymer layer 11 located at the innermost side, the second polymer layer 12 located at the outermost side and the metal layer 13 located between the first polymer layer 11 and the second polymer layer 12.

In the step S20 of forming the cup portion 21, the recessed cup portion 21 may be formed by pressing the pouch sheet 10 by the press machine 30. That is, the pouch sheet 10 may be formed into the pouch-type case 20 by the press machine 30.

The press machine 30 may include a die 31, a stripper 32 and a punch 33. In the step S10 of preparing the pouch sheet 10, the pouch sheet 10 may be positioned between the die 31 and the stripper 32. The pouch sheet 10 may be tightly held by the die 31 and the stripper 32.

In the step S20 of forming the cup portion 21, the pouch sheet 10 may be formed by the die 31, the stripper 32 and the punch 33. More specifically, the pouch sheet 10 may be tightly held by the die 31 and the stripper 32 and the cup portion 21 may be formed by the punch 33. In this instance, the punch 33 may move down to form the cup portion 21. Alternatively, the punch 33 may be fixed, and the die 31 and the stripper 32 may move up to form the cup portion 21.

The edge 211 of the cup portion 21 may be formed at the area of contact between the edge of the punch 33 and the pouch sheet 10.

In the step S20 of forming the cup portion 21, by the bending occurring at the edge 211 of the cup portion 21, the tensile force may act on the second polymer layer 12, and the compressive force may act on the metal layer 13.

The cup portion 21 may have an accommodation space accommodating an electrode assembly. In the step S20 of forming the cup portion 21, stretching may usually occur in the cup portion 21, and the terrace portion 22 may be tightly held by the die 31 and the stripper 32 as described below, so the stretch ratio at the terrace portion 22 may be smaller. In particular, the stretch ratio at the edge 211 of the cup portion 21 may be larger. Accordingly, the thickness of the cup portion 21, in particular, the thickness of the edge 211 may be smaller than the thickness of the terrace portion 22.

The step S10 of preparing the pouch sheet may include the step S11 of preparing the laminated sheet of the first polymer layer 11, the metal layer 13 and the base layer 121 and the step S12 of covering the base layer 121 with the reinforcement layer 122 at the outer side.

That is, the second polymer layer 12 may include the base layer 121, and the reinforcement layer 122 covering the base layer 121 at the outer side and having a larger thickness than the base layer 121.

When the reinforcement layer 122 is laminated with the first polymer layer 11, the metal layer 13 and the base layer 121, it is impossible to remove the reinforcement layer 122, so the reinforcement layer 122 may be separably attached to the base layer 121.

The method for manufacturing the battery case according to the present disclosure may further include, after the step S20 of forming the cup portion 21, the step S30 of removing the reinforcement layer 122. By removing the reinforcement layer 122, the total thickness of the pouch-type battery case 20 may be reduced.

Although the present disclosure has been hereinabove described with regard to a limited number of embodiments and drawings, the present disclosure is not limited thereto and it is obvious to persons having ordinary skill in the technical field pertaining to the present disclosure that various modifications and changes may be made thereto within the technical aspect of the present disclosure and the scope of the appended claims and their equivalents.

### [List of Reference Numerals]

| | | | |
|---|---|---|---|
| 10: | Pouch sheet | 11: | First polymer layer |
| 12: | Second polymer layer | 121 : | Base layer |
| 122 : | Reinforcement layer | 13: | Metal layer |
| 14: | Neutral plane | 20: | Pouch-type battery case |
| 21: | Cup portion | 22: | Terrace portion |
| 221 : | Edge (of cup portion) | 30: | Press machine |
| 31: | Die | 32: | Stripper |
| 33: | Punch | | |

## Claims

1. A pouch sheet that is formed into a pouch-type battery case, the pouch sheet comprising:
a first polymer layer located at an outermost side;
a second polymer layer located at an opposite outermost side; and
a metal layer located between the first polymer layer and the second polymer layer,
wherein the metal layer is located at a side of a neutral plane of the pouch sheet.

2. The pouch sheet according to claim 1,
wherein the second polymer layer includes a plurality of layers that are separable from each other.

3. The pouch sheet according to claim 1,
wherein the second polymer layer includes:
a base layer; and
a reinforcement layer covering the base layer at an outer side, and having a larger thickness than the base layer.

4. The pouch sheet according to claim 3,
wherein the first polymer layer, the metal layer and the base layer are laminated together, and
wherein the reinforcement layer is separably attached to the base layer.

5. The pouch sheet according to claim 3,
wherein the neutral plane of the pouch sheet from which the reinforcement layer is removed passes through the metal layer.

6. The pouch sheet according to claim 1,
wherein a thickness of the metal layer is larger than a thickness of the second polymer layer.

7. A pouch-type battery case having a recessed cup portion and a terrace portion disposed around the cup portion,
wherein the cup portion and the terrace portion include:
a first polymer layer located at an innermost side;
a second polymer layer located at an outermost side; and
a metal layer located between the first polymer layer and the second polymer layer, and
wherein the metal layer is located at a more inward side than a neutral plane of the case.

8. A method for manufacturing a battery case, comprising:
preparing a pouch sheet including a first polymer layer located at an innermost side, a second polymer layer located at an outermost side, and a metal layer located between the first polymer layer and the second polymer layer; and
forming a recessed cup portion in the pouch sheet,
wherein the metal layer is located at a more inward side than a neutral plane of the pouch sheet.

9. The method for manufacturing the battery case according to claim 8,
wherein the second polymer layer includes:
a base layer; and
a reinforcement layer covering the base layer at an outer side, and having a larger thickness than the base layer.

10. The method for manufacturing the battery case according to claim 9, further comprising:
removing the reinforcement layer after forming the cup portion.

11. The method for manufacturing the battery case according to claim 9,
wherein preparing the pouch sheet comprises includes:
preparing a laminated sheet of the first polymer layer, the metal layer and the base layer; and
covering the base layer with the reinforcement layer at the outer side.
